# EUROPÄISCHE PATENTANMELDUNG

(11) **EP 1 903 232 A2**
(43) Veröffentlichungstag der Anmeldung: **26.03.2008**
(21) Anmeldenummer: 07015053.7
(22) Anmeldetag: 01.08.2007
(51) Int. Cl.: F16D 1/072, F16H 53/02, F01L 1/047, F16C 3/02

(54) **Gebaute Nockenwelle mit unter die aufgeschobenen Bauteile reichenden Eindellungen**

(30) Priorität: 20.09.2006 DE 102006044735
(71) Anmelder: Muhr und Bender KG, 57439 Attendorn (DE)
(72) Erfinder: Brinkmann, Michael, Dipl.-Ing., 57462 Olpe (DE); Wolf, Jochen, Dipl.-Ing., 06484 Quedlinburg (DE); Asbeck, Jochen, Dr.-Ing., 57439 Attendorn (DE); Roßberger, Rüdiger, 06502 Thale (DE)
(74) Vertreter: Neumann, Ernst Dieter

(57) **Zusammenfassung**

Gebaute Nockenwelle 11, umfassend eine Rohrwelle 12 und eine Mehrzahl von mit je einer Durchgangsöffnung versehene Bauteile, insbesondere Nocken 13, 14, die auf die Rohrwelle 12 aufgeschoben und mit Abständen zueinander auf dieser festgelegt sind, wobei die Rohrwelle 12 zwischen den Bauteilen nach innen verformte seitliche Eindellungen 22 aufweist, wobei zumindest einzelne Eindellungen 21, 22, 23 bis unter zumindest eines der Bauteile 16, 29, 30, 31 reichen.

## Beschreibung

Die Erfindung betrifft eine gebaute Nockenwelle, umfassend eine Rohrwelle und eine Mehrzahl von mit je einer Durchgangsöffnung versehenen Bauteilen, insbesondere Nocken, die auf die Rohrwelle aufgeschoben und mit Abständen zueinander auf dieser festgelegt sind, wobei die Rohrwelle zwischen den aufgeschobenen Bauteilen nach innen verformte seitliche Eindellungen aufweist. Nockenwellen dieser Art sind aufgrund ihrer Leichtbaueigenschaft und wegen einer größeren Freiheit bei der Werkstoffauswahl für Hochleistungsmotoren zunehmend im Einsatz.

Ein Herstellungsverfahren für gebaute Nockenwellen ist in der DE 102 05 540 C1 der Anmelderin beschrieben. Die plastische Umformung von einzelnen Längsabschnitten der Rohrwelle erfolgt hiernach sequentiell durch örtlich begrenzte Aufgabe eines hohen hydraulischen Innendrucks der Rohrwelle innerhalb der aufgeschobenen Nokken, wobei sich Querschnittserweiterungen der Rohrwelle in glatten zylindrischen Durchgangsöffnungen der Nocken bilden, um Preßsitze zwischen Rohrwelle und Nocken zu erzeugen.

Bei Zylinderköpfen von Zweinockenwellenmotoren sind die Einbauverhältnisse im Zylinderkopf häufig beengt. Die Schraubenpfeifen zur Aufnahme der Zylinderkopfschrauben rücken dabei notwendigerweise nahe an die Nockenwellen heran, so daß die Schraubenpfeifen in Aufsicht auf den Zylinderkopf teilweise von den Nockenwellen verdeckt werden. In der Fertigung wird gefordert, daß die Nockenwellen im Zylinderkopf fertigmontiert werden, bevor der Zylinderkopf auf das Zylinderkurbelgehäuse aufgesetzt wird und mit diesem verschraubt wird. Bei Zylinderköpfen mit den zuvor genannten Eigenschaften ist dies durch die Verbauung des Zugangs zu den Schraubenpfeifen ausgeschlossen. Dieser Zugang wird nur durch die Verwendung von Sonderbauformen von Nockenwellen ermöglicht, die seitliche Einbuchtungen im Bereich der Schraubenpfeifen aufweisen, die den Querschnitt der Nockenwelle in diesem Bereich hohlkehlenförmig reduzieren und eine Verwendung von Schraubwerkzeugen für die Zylinderkopfschrauben bei bereits montierter Nockenwelle zulassen. Hiermit ist sowohl die Montage von fertigen Zylinderköpfen als auch das Nachziehen der Zylinderkopfschrauben ohne Demontage der Nockenwellen möglich.

Aus der DE 201 16 112 U1 ist ein Verfahren zur Herstellung von gebauten Nockenwellen mit den genannten Einbuchtungen bekannt, nach dem zunächst die Rohrwelle ohne Nocken in eine vollständige Matrize eingelegt wird, die den ganzen Rohrkörper spielfrei umschließt und in der einzelne Preßstempel geführt sind. Die Preßstempel besitzen jeweils quer zur Längsachse des Rohrkörpers verlaufende halbzylindrische Ausformungen an ihrem vorderen Ende, wobei dieses vordere Ende in den Matrizenhohlraum einbringbar ist. Mit den Preßstempeln werden zunächst die Einbuchtungen in die in die Matrize eingelegte Rohrwelle eingeformt, wobei die paßgenaue äußere Abstützung der Rohrwelle durch die Matrize dafür sorgt, daß keine Aufwerfungen nächst den Einbuchtungen bei der Umformung entstehen. Auf die mit Eindellungen versehene und im Querschnitt von der Matrize im wesentlichen unverändert gehaltene Rohrwelle werden dann die Nocken aufgeschoben und nach einem der bekannten Fügeverfahren wie Aufschrumpfen oder Aufpressen auf der Rohrwelle festgelegt. Das eingangs genannte Fügeverfahren zum Festlegen der Nocken durch Herstellen von Querschnittserweiterungen am Rohrkörper ist dabei beispielsweise ausgeschlossen, da Drucksonden zur Erzeugung eines hohen hydraulischen Innendruckes in das bereits verformte Rohr nicht mehr eingeführt werden können.

Aus der US 6 935 292 B2 ist ein Verfahren der gleichen Art zur Herstellung von gebauten Nockenwellen mit den genannten Einbuchtungen bekannt. Hierbei sollen die Eindellungen an dem Verfahrenserzeugnis keinesfalls unter die aufgeschobenen Bauteile wie Nocken und Lagerhülsen reichen. Damit sind axiale Mindestabstände zwischen den einzelnen Bauteilen einzuhalten, die sich mittelbar aus der Tiefe und unmittelbar aus der Breite der Eindellungen ergeben.

Hiervon ausgehend liegt der vorliegenden Erfindung die Aufgabe zugrunde, gebaute Nockenwellen der genannten Art bereitzustellen, die eine bei ausreichender Tiefe der seitlichen Eindellungen an der Rohrwelle engere Setzung benachbarter aufgeschobener Bauteile zulassen. Die Lösung liegt in einer gebauten Nockenwelle, umfassend eine Rohrwelle und eine Mehrzahl von mit je einer Durchgangsöffnung versehenen Bauteilen, insbesondere Nocken, die auf die Rohrwelle aufgeschoben und mit Abständen zueinander auf dieser festgelegt sind, wobei die Rohrwelle zwischen den Bauteilen nach innen verformte seitliche Eindellungen aufweist, von denen zumindest ein Teil der Eindellungen bis unter zumindest eines der Bauteile reicht. Gegebenenfalls können einzelne Eindellungen auch unter zwei benachbarte mit Abstand voneinander angeordnete Bauteile reichen. Mit der hiermit vorgeschlagenen Bauweise ist es möglich, bereits fertig gebauten Nockenwellen mit eng aneinandersitzenden aufgeschobenen Bauteilen mit zusätzlichen lokalen Umformungen zur Ausbildung von Montagefreiräumen zu versehen, bei denen die Sicherheit des Festsitzes der bereits festgelegten Bauteile nicht gefährdet ist.

Nach einer bevorzugten Ausführungsform ist vorgesehen, daß zumindest ein Teil der Bauteile, insbesondere Nocken, mit einstückig angeformten Hülsenansätzen, insbesondere Lagerhülsen, gebildet werden. Vorzugsweise auf solche Nocken bezieht sich der Gegenstand der Erfindung, wobei Bauteile mit insgesamt vergrößerter Sitzlänge gebildet werden, so daß das Sicherstrecken der Eindellungen unter die Bauteile nicht zu einer Verringerung des Festsitzes führt. Vielmehr ist insgesamt noch eine Verbesserung gegenüber auf ihrer gesamten axialen Länge befestigten Einzelnokken ohne Hülsenansatz gegeben. Die Erfindung umfaßt aber auch Bauteile in Form einfacher glatter zylindrischer Lagerhülsen.

Weiterhin wird vorgeschlagen, daß die Eindellungen ausschließlich unter die jeweiligen Hülsenansätze an den genannten Bauteilen reichen, die aus einem Nocken und einer einstückig angeformten Lagerhülse bestehen können.

Die genannten Hülsenansätze, insbesondere also Lagerhülsen zur Gleitlagerung der Nockenwelle im Zylinderkopf, sind in der Regel jeweils nur einseitig an einem Bauteil, insbesondere einem Nocken angeformt.

Weiterhin ist vorgesehen, daß die Rohrwelle jeweils im Bereich der Bauteile kaltverformte umfängliche Querschnittsvergrößerungen zur Festlegung der Bauteile hat. Hiermit ist die eingangs genannte bevorzugte Fügetechnik für die Bauteile durch örtlich axial begrenzte Aufgabe eines hohen hydraulischen Innendrucks auf die Rohrwelle innerhalb eines Bauteils anwendbar. Die daraus resultierende Durchmesservergrößerung kann sich dabei zunächst auf dem gesamten Umfang der Rohrwelle über die gesamte axiale Länge eines aus Nocken und Hülsenansatz bestehenden Bauteils und darüber hinaus erstrecken, da das Herstellen der Eindellungen im Bereich des Hülsenansatzes bevorzugt erst anschließend erfolgt.

Es wird weiterhin vorgeschlagen, daß die Durchmesservergrößerung mit glatten zylindrischen Durchgangsöffnungen der Bauteile zusammenwirken, konzentrisch zur Rohrwelle sind und Preßsitze mit den Bauteilen bilden, insbesondere daß die nichteingedellten Durchmesservergrößerungen nach dem Herstellen der Eindellungen jeweils zumindest über die axiale Länge der Nocke eines aus Nocke und Hülsenansatz bestehenden Bauteils reichen.

Weiterhin wird vorgeschlagen, daß die seitlichen Eindellungen oder Einbuchtungen quer zum Verlauf der Rohrwelle verlaufen und, insbesondere daß die Eindellungen etwa halbzylindrischen Durchdringungen des Rohrkörpers entsprechen. Hierbei können die Eindellungen an der Rohrinnenseite etwa bis zur Rohrachse reichen. Selbst hierbei noch ist bei der bevorzugten Erzeugung der Eindellungen in der Rohrwelle durch Warmverformung ein Erzeugnis mit der notwendigen Sicherheit für den Festsitz der Nocken auf der Rohrwelle gegeben. Die Eindellungen haben bezüglich ihrer Umfangslage bevorzugt übereinstimmende Orientierung.

Ein Ausführungsbeispiel eines Längsabschnitts einer erfindungsgemäßen Nockenwelle wird nachstehend anhand der Zeichnungen erläutert.
- Figur 1: zeigt einen Abschnitt einer erfindungsgemäßen gebauten Nockenwelle in Schrägansicht;
- Figur 2: zeigt den Abschnitt einer erfindungsgemäßen gebauten Nockenwelle nach Figur 1 im Längsschnitt.

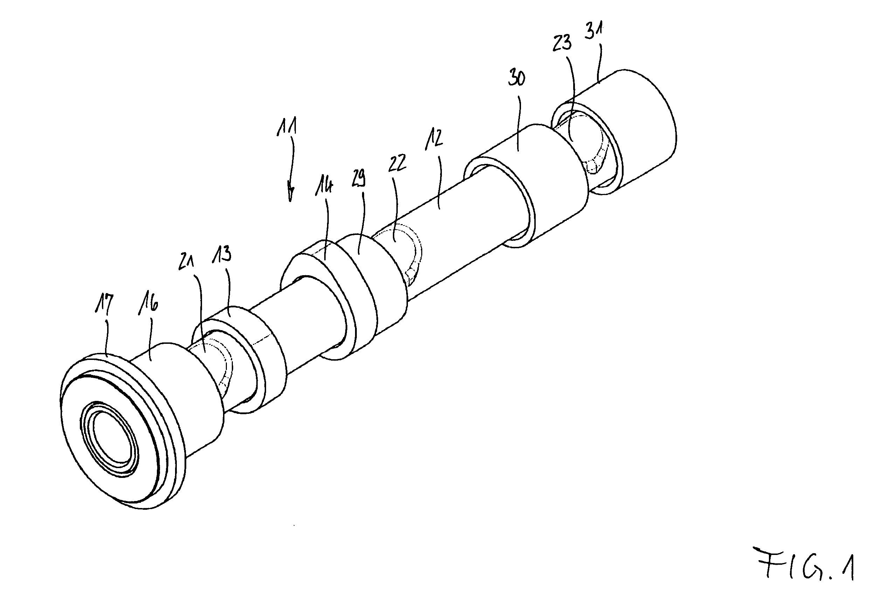

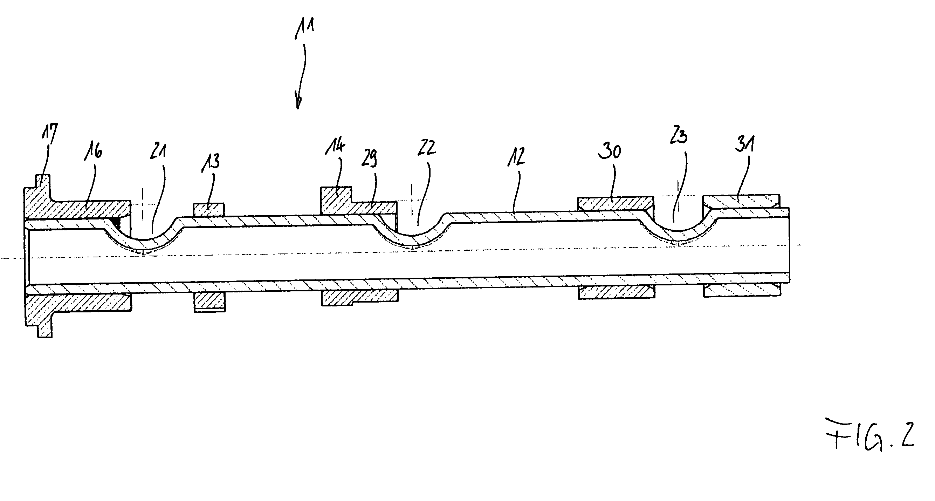

Die beiden Darstellungen der Figuren 1 und 2 werden nachstehend gemeinsam beschrieben. Es ist ein Endabschnitt einer gebauten Nockenwelle 11 zu erkennen, die im wesentlichen aus einer Rohrwelle 12 und darauf aufgeschobenen Konstruktionselementen bzw. Bauteilen besteht. Diese umfassen zwei Nocken 13, 14, die in verschiedenen Winkellagen auf der Rohrwelle 12 festgelegt sind. Hierzu ist die Rohrwelle 12 in jeweils den Nocken 13, 14 zugeordneten Längsabschnitten jeweils mittels Kaltverformung radial aufgeweitet, so daß die Nocken 13, 14 auf axial begrenzten Querschnittserweiterungen bzw. Durchmesservergrößerungen der Rohrwelle 12, die im vorliegenden Zeichnungsmaßstab nicht erkennbar sind, im Preßsitz festsitzen. Am Rohrende ist in gleicher Weise auf der Rohrwelle 12 eine Lagerhülse 16 mit einem Bund 17 festgelegt, die einer Fixierung eines Antriebsritzels dienen kann. An den Bund 17 kann ein solches Antriebsritzel zum Antrieb der Nockenwelle 11 angesetzt und z.B. im Preßsitz befestigt werden. Während der Nocken 13 übliche Scheibenform aufweist, ist der Nocken 14 einstückig mit einer Lagerhülse 29 ausgebildet. Mit Abstand zu den Nocken 13, 14 sind zwei Lagerhülsen 30, 31 in gleicher Weise wie diese auf der Rohrwelle 12 festgelegt, die auch untereinander einen Abstand haben. Jeweils benachbart zur Hülse 16, zur Hülse 29 am Nocken 14 und zwischen den beiden Lagerhülsen 30, 31 sind an der Rohrwelle 12 jeweils Eindellungen 21, 22, 23 ausgebildet. Diese Eindellungen 21, 22, 23 entsprechen etwa halbzylindrischen Durchdringungen der Rohrwelle 12, deren Achsen die Längsachse der Nokkenwelle 11 senkrecht kreuzen. Die Eindellungen 21, 22, 23 haben übereinstimmende Orientierung bezüglich ihrer Umfangslage, wobei die jeweiligen nicht dargestellten Achsen der halbzylindrischen Durchdringungen senkrecht zur Zeichnungsebene liegen. Die Eindellungen 21, 22, 23 ermöglichen es, Schrauben und Schraubwerkzeuge mit senkrecht zur Zeichnungsebene liegender Achse in sehr große Nähe an die Längsachse der Nockenwelle 11 heranzubringen. Dies ist zur Montage eines Zylinderkopfes bei bereits im Zylinderkopf montierter Nockenwelle in bestimmten Motorentypen erforderlich.

Eine erste Eindellung 21 liegt zwischen der Lagerhülse 16 und dem ersten Nocken 13 und reicht bis unter die Lagerhülse 16. Eine zweite Eindellung 22 reicht bis unter den Hülsenansatz 29 des zweiten Nockens 14, wobei der Nocken 14 auf seiner gesamten axialen Länge auf der Rohrwelle 12 umlaufend aufsitzt. Gegenüber dem Einzelnocken 13 ist der Nocken 14 mit der Lagerhülse 29 in der hier gezeigten Art mit einer größeren Sitzfläche mit der Rohrwelle 12 in Kontakt und hat damit einen stärkeren Festsitz auf der Rohrwelle, 12 als der Einzelnocken 13, ungeachtet der Eindellung 22, die bis unter die Lagerhülse 29 reicht. Eine dritte Eindellung 23 liegt zwischen den Lagerhülsen 30, 31 und reicht geringfügig bis unter diese. Die axiale Länge der Eindellungen 21, 22, 23 ist im wesentlichen durch die erforderliche Tiefe der Eindellungen gegeben. Gemäß der erfindungsgemäßen Ausbildung kann die größte Tiefe der Eindellungen 21, 22, 23 näher an die Bauteile heranrücken. Erfindungsgemäß werden die Eindellungen erst am jeweils örtlich erwärmten Rohrkörper 12 in Warmumformung eingedrückt, nachdem zuvor die Konstruktionselemente bzw. Bauteile auf ihrer gesamten Länge unter plastischer Kaltverformung des Rohrkörpers 12 durch Innen hochdruck festgelegt worden sind.

### Bezugszeichenliste

- 11: Nockenwelle
- 12: Rohrwelle
- 13: Nocken
- 14: Nocken
- 15: Durchgangsöffnung
- 16: Lagerhülse
- 17: Bund

- 21: Eindellung
- 22: Eindellung
- 23: Eindellung

- 29: Lagerhülse
- 30: Lagerhülse
- 31: Lagerhülse

## Patentansprüche

1. Gebaute Nockenwelle (11), umfassend eine Rohrwelle (12) und eine Mehrzahl von mit je einer Durchgangsöffnung versehenen Bauteilen, insbesondere Nokken (13, 14), die auf die Rohrwelle (12) aufgeschoben und mit Abständen zueinander auf dieser festgelegt sind, wobei die Rohrwelle (12) zwischen den Bauteilen nach innen verformte seitliche Eindellungen (22) aufweist,
**dadurch gekennzeichnet,**
**daß** zumindest ein Teil der Eindellungen (21, 22, 23) bis unter zumindest eines der Bauteile (16, 29, 30, 31) reicht.

2. Nockenwelle nach Anspruch 1,
**dadurch gekennzeichnet,**
**daß** zumindest ein Teil der Bauteile, mit einstückig angeformten Hülsenansätzen, ausgebildet sind.

3. Nockenwelle nach einem der Ansprüche 1 der 2,
**dadurch gekennzeichnet,**
**daß** die Eindellungen (22) ausschließlich unter die jeweiligen Hülsenansätze an den Bauteilen reichen.

4. Nockenwelle nach einem der Ansprüche 1 bis 3,
**dadurch gekennzeichnet,**
**daß** die Hülsenansätze jeweils nur einseitig an den Bauteilen angeformt sind.

5. Nockenwelle nach einem der Ansprüche 1 bis 4,
**dadurch gekennzeichnet,**
**daß** die Durchgangsöffnungen der Bauteile gerade zylindrische Öffnungen sind.

6. Nockenwelle nach einem der Ansprüche 1 bis 5,
**dadurch gekennzeichnet,**
**daß** die Rohrwelle (12) jeweils im Bereich der Bauteile kaltverformte Durchmesservergrößerungen zur Festlegung der Bauteile hat.

7. Nockenwelle nach Anspruch 6,
**dadurch gekennzeichnet,**
**daß** die Durchmesservergrößerungen konzentrisch zur Rohrwelle (12) sind und die Rohrwelle Preßsitze mit den Durchgangsöffnungen der Bauteile bildet.

8. Nockenwelle nach Anspruch 7,
**dadurch gekennzeichnet,**
**daß** die Durchmesservergrößerungen jeweils zumindest über die axiale Länge eines der Bauteile reichen.

9. Nockenwelle nach einem der Ansprüche 1 bis 8,
**dadurch gekennzeichnet,**
**daß** die seitlichen Eindellungen (21, 22, 23) warmverformte Eindellungen sind.

10. Nockenwelle nach einem der Ansprüche 1 bis 9,
**dadurch gekennzeichnet,**
**daß** die Eindellungen (21, 22, 23) bezüglich ihrer Umfangslage übereinstimmende Orientierung haben.

11. Verfahren zur Herstellung einer gebauten Nockenwelle nach einem der Ansprüche 1 bis 10,
**dadurch gekennzeichnet,**
**daß** zunächst die Bauteile durch Hochdruckinnenumformung, d.h. Kaltumformung, der Rohrwelle (12) auf dieser festgelegt werden und anschließend die Eindellungen (21, 22, 23) an der Rohrwelle (12) vorgenommen werden.

12. Verfahren nach Anspruch 11,
**dadurch gekennzeichnet,**
**daß** die bis unter die Bauteile reichenden Eindellungen in Warmverformung an der jeweils örtlich erwärmten Rohrwelle (12) hergestellt werden.
